# EUROPÄISCHE PATENTSCHRIFT

(11) **EP 3 078 644 B1**
(45) Veröffentlichungstag und Bekanntmachung des Hinweises auf die Patenterteilung: **12.02.2020**
(21) Anmeldenummer: 16163875.4
(22) Anmeldetag: 05.04.2016
(51) Int. Cl.: C03C 3/091, C03C 27/04, B32B 15/01, C22C 19/03, C22C 19/05, C22C 38/10, H01B 1/02, H01R 43/16, H01R 13/03, H01B 17/30

(54) **VERFAHREN ZU HERSTELLUNG EINER GLASDURCHFÜHRUNG MIT KONTAKTSTIFTEN**
METHOD OF MANUFACTURING A GLASS FEED-THROUGH WITH CONTACT PINS
PROCÉDÉ DE FABRICATION D'UNE TRAVERSÉE EN VERRE AVEC TIGES DE CONTACT

(30) Priorität: 09.04.2015 DE 102015206314
(43) Veröffentlichungstag der Anmeldung: 12.10.2016
(73) Patentinhaber: IL Metronic Sensortechnik GmbH, 98693 Ilmenau-Unterpörlitz (DE)
(72) Erfinder: ALTSTADT, Erhard, 98693 Ilmenau (DE); KIRCHHOFF, Rolf, 98693 Ilmenau (DE); NICOLAI, Katja, 98693 Ilmenau (DE)
(74) Vertreter: Liedtke, Klaus

(56) Entgegenhaltungen:
- JP-A- H09 293 817
- US-A- 2 885 826
- US-A- 4 716 082
- US-A- 5 709 724

## Beschreibung

Die Erfindung betrifft ein Verfahren zur Herstellung von Glasdurchführungen mit Kontaktstiften aus einer Eisenlegierung.

Herkömmliche Kontaktstifte in elektrischen Durchführungen werden, um bondbare, steckbare oder lötbare Oberflächen zu erzielen, nach ihrem Einglasen üblicherweise galvanisch vernickelt, vergoldet oder verzinnt.

Hierzu werden die Kontaktstifte mit einem Kupferdraht umwickelt, um einen elektrischen Anschluss für den galvanischen Prozess zu erzeugen

Nachteilig dabei sind der hohe Arbeitsaufwand und eine Beeinträchtigung der Isolierfähigkeit des Glases.

Aus der US 2 885 826 ist es bekannt, Rhodium-galvanisierte Metallteile für Glas-Metall-Verschmelzungen und ihre Einglasung zu verwenden. Rhodinierte Kontaktstifte haben jedoch den Nachteil von Einschränkung bei Löt- bzw. Bondbarkeitsprozessen.

Aus der US 5,709,724 A ist ein Verfahren zur Bildung einer hermetischen Glas-Metall-Abdichtung zwischen einem leitfähigen Pin und einem äußeren Körper bekannt, wobei eine korrosionsbeständige Edelmetallbeschichtung (beispielsweise Gold) auf das leitfähige Pin aufgebracht wird, bevor die hermetische Abdichtung gebildet wird. Das Verfahren beinhaltet das Bereitstellen eines mit einem Edelmetall beschichteten, leitfähigen Pins, Einbringen von Glas mit einer Erweichungstemperatur unterhalb von etwa 650 °C in einen Hohlraum des äußeren Körpers, Einsetzen des beschichteten, leitfähigen Pins in eine Bohrung in der Glas-Preform, Aufheizen der Anordnung auf eine Temperatur oberhalb des Erweichungspunkts des Glases aber unterhalb von 700 °C und Abkühlen der Anordnung. Die thermischen Ausdehnungskoeffizienten der Komponenten der Anordnung werden vorzugsweise so gewählt, dass die resultierende Anordnung eine hermetische Pressdichtung darstellt.

Aus der JP H09 293817 A ist bekannt, Löteigenschaften elektronischer Teile, für die die Materialien Eisen, Eisenlegierungen und Kobalt verwendet werden, zu verbessern und Verfahrensschritte ohne Lötbeschichtung zu vereinfachen, indem aufeinanderfolgend eine Stützbeschichtung aus Kupfer auf der Metalloberfläche der elektronischen Teile gebildet wird, darauf eine Nickelbeschichtung und darauf zusätzlich eine Beschichtung aus Palladium oder einer Palladiumlegierung abgeschieden wird. Zuleitungen werden in einem Paar von Lochteilen bereitgestellt, welche einen Schaft durchdringend angeordnet sind. Durchgangs-Glas zum Isolieren und Abdichten wird zur Unterseite des Schaftes geführt. Stützen zum Abstützen eines Kristalloszillators sind auf den Zuleitungen vorgesehen, welche von der oberen Oberfläche des Schaftes abstehen. Der Schaft besteht aus Eisen, die Zuleitungen bestehen aus einer Eisen-Nickel-Legierung. Eine Stützbeschichtung aus Kupfer wird auf der gesamten Oberfläche des metallischen Teils des Schaftes und den Zuleitungen gebildet und eine Nickelbeschichtung wird darauf gebildet. Zusätzlich werden darauf eine Palladiumbeschichtung und darauf eine Goldbeschichtung gebildet. Als Beschichtungsverfahren können elektrische, nicht elektrische und andere Beschichtungsverfahren zum Einsatz kommen.

Der Erfindung liegt die Aufgabe zu Grunde, ein Verfahren zur Herstellung einer Glasdurchführung mit lötbaren Kontaktstiften anzugeben.

Die Aufgabe wird erfindungsgemäß gelöst durch ein Verfahren mit den in den Ansprüchen 1 bis 4 angegebenen Merkmalen.

Die in dem erfindungsgemäßen Verfahren entaltenen Kontaktstifte bestehen aus einer Eisen-Nickel-Einschmelzlegierung, die mit einer Nickelschicht versehen und mit Rhodium und/oder Platin beschichtet werden.

Ferner ist es möglich, dass die Kontaktstifte mit einer Nickelschicht versehen und mit Palladium beschichtet werden.

Eine vorteilhafte Ausgestaltung sieht vor, dass die Kontaktstifte zusätzlich mit einer Goldschicht versehen werden.

Die Dicken der auf die Kontaktstifte aufgetragenen Schichten betragen vorteilhafterweise:
- für die Nickelschicht 5 bis 20 µm,
- für die Rhodiumschicht 0,2 bis 1 µm, vorzugsweise 0,5 bis 1 µm,
- für die Goldschicht 1 bis 3 µm.

Bei dem erfindungsgemäßen Verfahren werden die Kontaktstifte zunächst durch Entfetten und Aktivieren, vorzugsweise durch Aktivieren mittels sauren Ätzens, gereinigt. Danach erfolgt das Aufbringen einer Nickelschicht unter Schutzgasatmosphäre mit anschließendem Formatieren bei 850 bis 1050°C. Die Schutzgasatmosphäre besteht vorzugsweise aus 10 bis 100% Wasserstoff, wobei der Rest aus Stickstoff besteht. Anschließend erfolgt eine Beschichtung mit Palladium oder mit Rhodium und Platin oder mit Platin oder mit Rhodium und Gold.

Mit der Anwendung der patentgemäßen Schichten auf Kontaktstifte erfolgt erfindungsgemäß die galvanische Beschichtung vor dem Einglasen und damit mit wesentlich geringerem Aufwand. Die erfindungsgemäß hergestellen Schichten überstehen den Einglasprozess, ohne dass ihre Gebrauchseigenschaften für das Bonden, Löten bzw. Stecken wesentlich beeinträchtigt werden, während Gold- bzw. Zinnschichten bekanntermaßen auf diese Weise unbrauchbar würden.

Ausführungen der Erfindung werden im Folgenden anhand von Beispielen näher erläutert.

### Beispiel 1:

### Herstellung einer Glasdurchführung mit lötbaren Kontaktstiften

Kontaktstifte aus NiFe47 werden durch Entfetten und saures Ätzen gereinigt. Die Oberfläche der Kontaktstifte wird anschließend mittels einer Galvanisierung in einem sulfaminsauren Elektrolyten mit einer hochreinen Nickelschicht von 10 - 15 µm Dicke versehen. Danach wird die Nickelschicht bei 900°C in einer Schutzgasatmosphäre von 75% Stickstoff und 25% Wasserstoff über 20 min. formatiert.

Anschließend erfolgt eine Beschichtung mit 1 µm Palladium; die wiederum bei 900°C formatiert wird.

Die so präparierten Kontaktstifte werden zusammen mit Vorformen (sog. "Preforms") aus einem Einschmelzglas mit 2,36% Al₂O₃, 0,14% MgO, 13,8% BaO, 6,35% K₂O, 2,84% B₂O₃, 64,26 SiO₂, 0,36% CaO, 7,18%CaO, 7,2% Na₂O, 2,6% Li₂O und Platinen aus X5CrNi18 - 10 in einer Vorrichtung aus E - Graphit montiert. Die so angeordneten Komponenten werden anschließend in einem Chargierofen in einer trocknen Stickstoffatmosphäre bei 870°C für eine Zeitspanne von 25 min. erhitzt, um die Komponenten mit Glas vakuumdicht zu verschmelzen. Die Verschmelzung ergibt nach Abkühlung eine Glasdurchführung mit lötbaren Kontaktstiften.

Die Lötbarkeit der Kontaktstifte wurde nach MIL - STD - 202G, METHOD 208 nachgewiesen.

### Beispiel 2:

### Herstellung einer Glasdurchführung mit lötbaren Kontaktstiften

Kontaktstifte aus FeNi29Co18 werden, wie im Beispiel 1 beschrieben, gereinigt und mit einer hochreinen Nickelschicht von 10 - 15 µm versehen. Nach der oben genannten Wärmebehandlung erfolgt eine Beschichtung mit 0,5µm Rhodium und 1 µm Platin, die wiederum bei 900°C formatiert wird.

Die so präparierten Kontaktstifte werden zusammen mit Preforms aus einem Einschmelzglas Schott 8250 und Drehteilen aus NiCr22Mo9Nb in einer Vorrichtung aus E - Graphit montiert. Die so angeordneten Komponenten werden anschließend in einem Chargierofen in einer trocknen Schutzgasatmosphäre bei 1020°C für eine Zeitspanne von 35 min. erhitzt, um die Komponenten mit Glas vakuumdicht zu verschmelzen.

Die Verschmelzung ergibt nach der Abkühlung eine Glasdurchführung mit sowohl lötbaren als auch steckbaren Kontaktstiften.

Die Lötbarkeit und Steckbarkeit der Kontaktstifte wurde nach MIL - STD - 202G, METHOD 208 und nach DIN42802 nachgewiesen.

### Beispiel 3:

### Herstellung einer Glasdurchführung mit lötbaren und bondbaren Kontaktstiften

Kontaktstifte aus FeNi29Co18 werden wie im Beispiel 1 beschrieben, gereinigt und mit einer hochreinen Nickelschicht von 5 µm versehen. Nach der oben genannten Wärmebehandlung erfolgt eine Beschichtung mit 1 µm Platin, die wiederum bei 900°C formatiert wird.

Die so präparierten Kontaktstifte werden zusammen mit den Preforms aus einem Einschmelzglas mit der Bezeichnung IN3 von der Firma Electroglass und Flanschen aus Titan Grade 5 in einer Vorrichtung aus E - Graphit montiert. Die so angeordneten Komponenten werden wie im Beispiel 1, jedoch in einer Argonatmosphäre, verschmolzen.

Die Verschmelzung ergibt nach der Abkühlung eine Glasdurchführung mit sowohl lötbaren als auch Ultraschall - bondbaren Kontaktstiften.

Der Drahtbondtest wurde entsprechend MIL - STD - 883 nach Verfahren 2023,5 erfüllt.

### Beispiel 4:

### Herstellung einer Glasdurchführung mit lötbaren und bondbaren Kontaktstiften

Kontaktstifte aus NiFe47 werden wie im Beispiel 1 beschrieben, gereinigt und mit einer hochreinen Nickelschicht mit 5µm versehen. Nach der oben genannten Wärmebehandlung erfolgt eine Beschichtung mit 0,5µmRh und nachfolgend mit 2,5 Feingold, die wiederum bei 900°C formatiert wird. Nach der Formatierung ist der Goldschicht die goldene Farbe entzogen, ähnlich einer Weißgoldlegierung. Die so präparierten Kontaktstifte werden wie im Beispiel 1 verschmolzen.

Die Verschmelzung ergibt eine Glasdurchführung mit sowohl lötbaren als auch US - bondbaren Kontaktstiften.

## Patentansprüche

1. Verfahren zur Herstellung einer Glasdurchführung mit Kontaktstiften, wobei folgende Verfahrensschritte durchgeführt werden:
- zunächst Reinigen von Kontaktstiften aus einer Eisen-Nickel-Einschmelzlegierung durch Entfetten und Aktivieren,
- danach Aufbringen einer Nickelschicht auf die Kontaktstifte mittels Galvanisierung in einem Elektrolyten,
- anschließend Formatieren der Nickelschicht bei 850 bis 1050°C in einer Schutzgasatmosphäre,
- anschließend Beschichten der Kontaktstifte mit Palladium und Formatieren bei 850 bis 1050°C,
- Montieren der so präparierten Kontaktstifte mit Preforms aus einem Einschmelzglas in einer Vorrichtung aus Graphit,
- anschließend vakuumdichtes Verschmelzen der Stifte mit Glas in einer Schutzgasatmosphäre bei 800 bis 1100°C.

2. Verfahren zur Herstellung einer Glasdurchführung mit Kontaktstiften wobei folgende Verfahrensschritte durchgeführt werden:
- zunächst Reinigen von Kontaktstiften aus einer Eisen-Nickel-Einschmelzlegierung durch Entfetten und Aktivieren,
- danach Aufbringen einer Nickelschicht auf die Kontaktstifte mittels Galvanisierung in einem Elektrolyten,
- anschließend Formatieren der Nickelschicht bei 850 bis 1050°C in einer Schutzgasatmosphäre,
- anschließend Beschichten der Kontaktstifte mit Rhodium und Platin und Formatieren bei 850 bis 1050°C,
- Montieren der so präparierten Kontaktstifte mit Preforms aus einem Einschmelzglas in einer Vorrichtung aus Graphit,
- anschließend vakuumdichtes Verschmelzen der Stifte mit Glas in einer Schutzgasatmosphäre bei 800 bis 1100°C.

3. Verfahren zur Herstellung einer Glasdurchführung mit Kontaktstiften, wobei folgende Verfahrensschritte durchgeführt werden:
- zunächst Reinigen von Kontaktstiften aus einer Eisen-Nickel-Einschmelzlegierung durch Entfetten und Aktivieren,
- danach Aufbringen einer Nickelschicht auf die Kontaktstifte mittels Galvanisierung in einem Elektrolyten,
- anschließend Formatieren der Nickelschicht bei 850 bis 1050°C in einer Schutzgasatmosphäre,
- anschließend Beschichten der Kontaktstifte mit Platin und Formatieren bei 850 bis 1050°C,
- Montieren der so präparierten Kontaktstifte mit Preforms aus einem Einschmelzglas in einer Vorrichtung aus Graphit,
- anschließend vakuumdichtes Verschmelzen der Stifte mit Glas in einer Schutzgasatmosphäre bei 850 bis 1100°C.

4. Verfahren zur Herstellung einer Glasdurchführung mit Kontaktstiften, wobei folgende Verfahrensschritte durchgeführt werden:
- zunächst Reinigen von Kontaktstiften aus einer Eisen-Nickel-Einschmelzlegierung durch Entfetten und Aktivieren,
- danach Aufbringen einer Nickelschicht auf die Kontaktstifte mittels Galvanisierung in einem Elektrolyten,
- anschließend Formatieren der Nickelschicht bei 850 bis 1050°C in einer Schutzgasatmosphäre,
- anschließend Beschichten der Kontaktstifte mit Rhodium und Feingold und Formatieren bei 800 bis 950°C,
- Montieren der so präparierten Kontaktstifte mit Preforms aus einem Einschmelzglas in einer Vorrichtung aus Graphit,
- anschließend vakuumdichtes Verschmelzen der Stifte mit Glas in einer Schutzgasatmosphäre bei 800 bis 900°C.

## Claims

1. Process for producing a glass feed-through with contact pins, wherein the following process steps are carried out:
- firstly cleaning of contact pins composed of an iron-nickel sealing-in alloy by degreasing and activation,
- then application of a nickel layer to the contact pins by means of electroplating in an electrolyte,
- subsequently formatting of the nickel layer at from 850 to 1050°C in a protective gas atmosphere,
- subsequently coating of the contact pins with palladium and formatting at from 850 to 1050°C,
- installation of the contact pins prepared in this way with preforms composed of a sealing-in glass in an apparatus composed of graphite,
- subsequently vacuum-tight bonding of the pins to glass in a protective gas atmosphere at from 800 to 1100°C.

2. Process for producing a glass feed-through with contact pins, wherein the following process steps are carried out:
- firstly cleaning of contact pins composed of an iron-nickel sealing-in alloy by degreasing and activation,
- then application of a nickel layer to the contact pins by means of electroplating in an electrolyte,
- subsequently formatting of the nickel layer at from 850 to 1050°C in a protective gas atmosphere,
- subsequently coating of the contact pins with rhodium and platinum and formatting at from 850 to 1050°C,
- installation of the contact pins prepared in this way with preforms composed of a sealing-in glass in an apparatus composed of graphite,
- subsequently vacuum-tight bonding of the pins to glass in a protective gas atmosphere at from 800 to 1100°C.

3. Process for producing a glass feed-through with contact pins, wherein the following process steps are carried out:
- firstly cleaning of contact pins composed of an iron-nickel sealing-in alloy by degreasing and activation,
- then application of a nickel layer to the contact pins by means of electroplating in an electrolyte,
- subsequently formatting of the nickel layer at from 850 to 1050°C in a protective gas atmosphere,
- subsequently coating of the contact pins with platinum and formatting at from 850 to 1050°C,
- installation of the contact pins prepared in this way with preforms composed of a sealing-in glass in an apparatus composed of graphite,
- subsequently vacuum-tight bonding of the pins to glass in a protective gas atmosphere at from 850 to 1100°C.

4. Process for producing a glass feed-through with contact pins, wherein the following process steps are carried out:
- firstly cleaning of contact pins composed of an iron-nickel sealing-in alloy by degreasing and activation,
- then application of a nickel layer to the contact pins by means of electroplating in an electrolyte,
- subsequently formatting of the nickel layer at from 850 to 1050°C in a protective gas atmosphere,
- subsequently coating of the contact pins with rhodium and fine gold and formatting at from 800 to 950°C,
- installation of the contact pins prepared in this way with preforms composed of a sealing-in glass in an apparatus composed of graphite,
- subsequently vacuum-tight bonding of the pins to glass in a protective gas atmosphere at from 800 to 900°C.

## Revendications

1. Procédé de fabrication d'une traversée de verre avec des tiges de contact, selon lequel les étapes de procédé suivantes sont réalisées :
- tout d'abord un nettoyage de tiges de contact en un alliage de soudure de fer-nickel par dégraissage et activation,
- puis une application d'une couche de nickel sur les tiges de contact par galvanisation dans un électrolyte,
- puis un formatage de la couche de nickel à une température de 850 à 1 050 °C dans une atmosphère de gaz de protection,
- puis un revêtement des tiges de contact avec du palladium et un formatage à une température de 850 à 1 050 °C,
- le montage des tiges de contact ainsi préparées avec des préformes en un verre de soudure dans un dispositif en graphite,
- puis la fusion étanche au vide des tiges avec le verre dans une atmosphère de gaz de protection à une température de 800 à 1 100 °C.

2. Procédé de fabrication d'une traversée de verre avec des tiges de contact, selon lequel les étapes de procédé suivantes sont réalisées :
- tout d'abord un nettoyage de tiges de contact en un alliage de soudure de fer-nickel par dégraissage et activation,
- puis une application d'une couche de nickel sur les tiges de contact par galvanisation dans un électrolyte,
- puis un formatage de la couche de nickel à une température de 850 à 1 050 °C dans une atmosphère de gaz de protection,
- puis un revêtement des tiges de contact avec du rhodium et du platine et un formatage à une température de 850 à 1 050 °C,
- le montage des tiges de contact ainsi préparées avec des préformes en un verre de soudure dans un dispositif en graphite,
- puis la fusion étanche au vide des tiges avec le verre dans une atmosphère de gaz de protection à une température de 800 à 1 100 °C.

3. Procédé de fabrication d'une traversée de verre avec des tiges de contact, selon lequel les étapes de procédé suivantes sont réalisées :
- tout d'abord un nettoyage de tiges de contact en un alliage de soudure de fer-nickel par dégraissage et activation,
- puis une application d'une couche de nickel sur les tiges de contact par galvanisation dans un électrolyte,
- puis un formatage de la couche de nickel à une température de 850 à 1 050 °C dans une atmosphère de gaz de protection,
- puis un revêtement des tiges de contact avec du platine et un formatage à une température de 850 à 1 050 °C,
- le montage des tiges de contact ainsi préparées avec des préformes en un verre de soudure dans un dispositif en graphite,
- puis la fusion étanche au vide des tiges avec le verre dans une atmosphère de gaz de protection à une température de 850 à 1 100 °C.

4. Procédé de fabrication d'une traversée de verre avec des tiges de contact, selon lequel les étapes de procédé suivantes sont réalisées :
- tout d'abord un nettoyage de tiges de contact en un alliage de soudure de fer-nickel par dégraissage et activation,
- puis une application d'une couche de nickel sur les tiges de contact par galvanisation dans un électrolyte,
- puis un formatage de la couche de nickel à une température de 850 à 1 050 °C dans une atmosphère de gaz de protection,
- puis un revêtement des tiges de contact avec du rhodium et de l'or fin et un formatage à une température de 800 à 950 °C,
- le montage des tiges de contact ainsi préparées avec des préformes en un verre de soudure dans un dispositif en graphite,
- puis la fusion étanche au vide des tiges avec le verre dans une atmosphère de gaz de protection à une température de 800 à 900 °C.
